# FASCICULE DE BREVET EUROPEEN

(11) **EP 4 650 303 B1**
(45) Date de publication et mention de la délivrance du brevet: **17.06.2026**
(21) Numéro de dépôt: 25175521.1
(22) Date de dépôt: 09.05.2025
(51) Int. Cl.: B65G 1/07, B65G 57/24, B65G 59/04, B66F 7/06, B66F 9/075, F16M 11/04, B65G 1/137, B65D 19/44

(54) **TABLE ÉLÉVATRICE DE MANUTENTION À AJUSTEMENT AUTOMATIQUE DE NIVEAU À BASE RENFORCÉE**
HUBTISCH MIT AUTOMATISCHER NIVEAUEINSTELLUNG AUF VERSTÄRKTEM BASIS
LIFTING TABLE WITH AUTOMATIC LEVEL ADJUSTMENT WITH REINFORCED BASE

(30) Priorité: 14.05.2024 FR 2404937
(43) Date de publication de la demande: 19.11.2025
(73) Titulaire: 1A Machines et Ingenierie Speciales, 26800 Étoile-sur-Rhône (FR)
(72) Inventeur: VAIRO, Olivier, 69007 LYON (FR)
(74) Mandataire: Opilex

(56) Documents cités:
- CN-U- 211 336 860
- US-A1- 2006 283 669
- US-A1- 2011 309 228
- ANONYMOUS: "Table élévatrice à ressorts: PalletPal 360(TM)", MARCOLIFT.COM, 11 June 2019 (2019-06-11), pages 1 - 2, XP093073559, Retrieved from the Internet <URL:https://marcolift.com/wp-content/uploads/2019/06/PalletPall_Fra_Marco4.pdf> [retrieved on 20230814]

## Description

L'invention concerne le domaine de la manutention de paquets ou objets, et en particulier le domaine des tables élévatrices ou tables de mise à niveau destinées à collecter ou distribuer ces paquets et conçues pour être gerbables par des chariots élévateurs ou des gerbeurs.

Des tables élévatrices connues comprennent un plateau coulissant verticalement par rapport à un châssis posé au sol ou transporté par un charriot. Le châssis comporte un espace sous une structure porteuse, permettant de passer des fourches basses fixes et des fourches d'élévation du chariot pour procéder à l'élévation de la table et permettre son déplacement, avec ou sans charge. Un ou plusieurs ressorts verticaux sont interposés entre la structure porteuse et le plateau pour permettre une adaptation du niveau du plateau en fonction de sa charge par leur déformation élastique progressive. Une telle table s'avère donc particulièrement ergonomique pour permettre à des manipulateurs de charger et décharger des paquets.

Pour limiter l'encombrement et faciliter les empilements, ces tables élévatrices peuvent comporter des pièces de base sous formes de longerons et de traverses.

Au vu des charges que doit supporter la table élévatrice, les pièces support de la structure porteuse finissent par se déformer en utilisation, notamment via des sollicitations dans le sens horizontal. Malheureusement, l'encombrement du ou des ressorts verticaux limite les possibilités de renforcement des pièces support de la structure porteuse. Une table élévatrice selon le préambule de la revendication 1 est connue de US 2006 283669 A1.

L'invention vise à résoudre un ou plusieurs de ces inconvénients. L'invention porte ainsi sur une table élévatrice de manutention à ajustement automatique de niveau, caractérisé en ce qu'elle comprend :
- un plateau ;
- une structure porteuse comportant des premier, deuxième et troisième longerons parallèles s'étendant selon une direction longitudinale, comportant des première et deuxième poutres s'étendant selon une direction transversale et solidarisant les premier, deuxième et troisième longerons au niveau de première et deuxième extrémités longitudinales respectivement, des première et deuxième ouvertures étant ménagées sous la première poutre entre les premier et deuxième longerons d'une part et entre les deuxième et troisième longerons d'autre part, des troisième et quatrième ouvertures étant ménagées sous la deuxième poutre entre les premier et deuxième longerons d'une part et entre les deuxième et troisième longerons d'autre part, les première à quatrième ouvertures étant configurées pour permettre l'insertion d'une fourche de chariot ;
- au moins un ressort vertical comportant une première extrémité sollicitant le plateau et une deuxième extrémité sollicitant le deuxième longeron et logée dans le deuxième longeron,
dans laquelle la première et/ou la deuxième poutres (34, 9) comporte une partie circulaire s'étendant horizontalement autour d'au moins une partie du ressort.

L'invention porte également sur les variantes des revendications dépendantes. L'homme du métier comprendra que chacune des caractéristiques des revendications indépendantes et de la description peut être combinée indépendamment aux caractéristiques d'une revendication indépendante, sans pour autant constituer une généralisation intermédiaire.

Selon une variante, la table élévatrice de manutention à ajustement automatique de niveau comprend plusieurs ressorts verticaux alignés selon la direction longitudinale et ayant leur deuxième extrémité sollicitant le deuxième longeron et logée dans le deuxième longeron,
dans laquelle la première et la deuxième poutres comportent chacune une partie circulaire s'étendant horizontalement autour d'un desdits ressorts.

Selon encore une variante, ladite poutre est sous forme de deux bras séparés, l'un étant antérieur et l'autre étant postérieur audit ressort.

Selon une autre variante, ladite poutre a une forme de profilé creux.

Selon encore une variante, ladite poutre comprend sur une face inférieure, au moins un patin de réception d'une fourche de charriot.

Selon une autre variante, les poutres comprennent des sections en U ouvertes vers le bas.

Selon encore une variante, le deuxième longeron comporte une section en U ouverte vers le haut.

Selon une autre variante, la table élévatrice comprend au moins un système de ciseaux latéral guidant le plateau en coulissement selon la direction verticale
Selon encore une variante, le système de ciseaux latéral comprend, de chaque côté latéral, deux bras latéraux ayant chacun une extrémité inférieure fixée à un longeron latéral, caractérisée en ce que les longerons latéraux ont une section en U ou en L ouverte vers le haut logeant les extrémités inférieures des bras des ciseaux latéraux.

Selon une autre variante, les premier à troisième longerons comportent une face inférieure destinée à former une surface d'appui au sol.

D'autres caractéristiques et avantages de l'invention ressortiront clairement de la description qui en est faite ci-après, à titre indicatif et nullement limitatif, en référence aux dessins annexés, dans lesquels :
Fig.1 est une vue en perspective d'une table élévatrice de manutention à ajustement automatique de niveau selon un mode de réalisation de l'invention ;
Fig.2 est une vue en perspective de détail de la table élévatrice de la figure 1 au niveau du dessus de la poutre arrière ;
Fig.3 est une vue en perspective de détail de la table élévatrice de la figure 1 au niveau du dessus de la poutre avant ;
Fig.4 est une vue en perspective illustrant le dessous de la table élévatrice de la figure 1 .

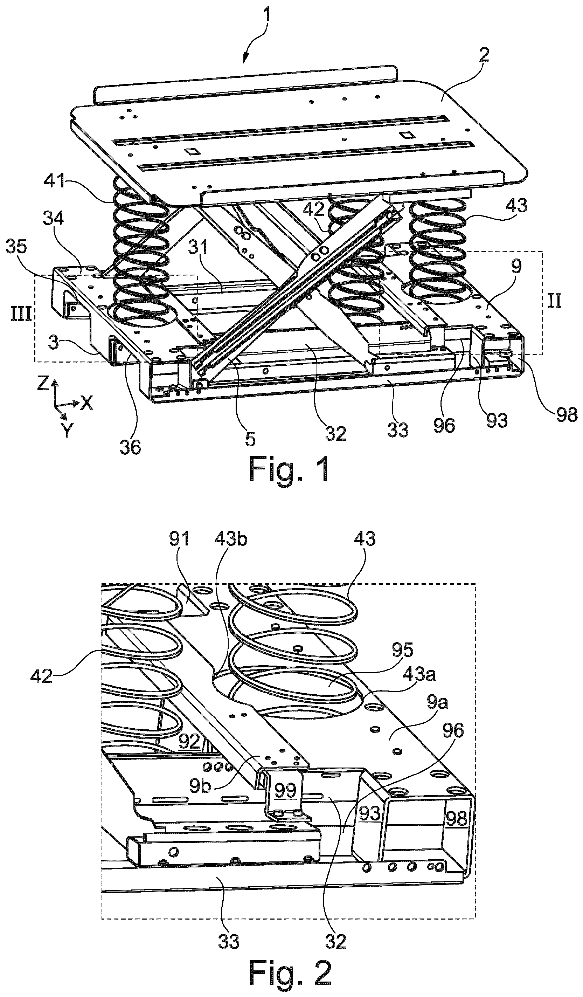

La figure 1 est une vue en perspective d'une table élévatrice de manutention à ajustement automatique de niveau 1 selon un mode de réalisation de l'invention. La table 1 comprend un plateau 2, une structure porteuse 3 et un ressort vertical 41.

La structure porteuse 3 comporte des premier, deuxième et troisième longerons parallèles 31 à 33. Ces longerons 31 à 33 s'étendent selon une direction longitudinale X. Ces longerons 31 à 33 servent le cas échéant à former des appuis au sol de la table 1, assurer sa rigidité en flexion autour d'un axe transversal Y et assurer la liaison entre des poutres transversales.

En particulier, les premier, deuxième et troisième longerons 31, 32, 33 ont une structure creuse, par exemple de type profilé. Le deuxième longeron 32 est ici en position centrale et comporte une section en U ouverte vers le haut. Le ressort vertical 41 comporte une première extrémité sollicitant le plateau 2 et une deuxième extrémité sollicitant le deuxième longeron 32. L'effort élastique fourni par le ressort 41 est proportionnel à la charge appliquée sur le plateau 2 et permet d'adapter automatiquement le niveau selon la direction verticale Z du plateau 2 en fonction de la charge. Ce système assure donc une fonction d'ergonomie, permettant à un manipulateur de charger le plateau 2 toujours à un niveau satisfaisant, quelle que soit la charge déjà appliquée sur le plateau 2. La deuxième extrémité du ressort 41 est logée dans le deuxième longeron 32 entre les première et deuxième ouvertures 35 et 36, grâce à la section en U ouverte vers le haut de ce longeron 32. La deuxième extrémité du ressort 41 est ainsi logée entre des flancs verticaux de ce longeron 32 et une partie du ressort peut ainsi être logée à proximité du sol, avec des zones de passage des fourches de part et d'autre du ressort 41. L'encombrement vertical du ressort 41 peut ainsi être réduit, ce qui permet de disposer d'une plus grande course pour le plateau 2 et ainsi permettre un plus grand chargement dans des conditions de bonne ergonomie. Par ailleurs, le plateau 2 peut être rapproché du sol en condition de charge, ce qui assure une plus grande stabilité.

Dans l'exemple illustré ici, la table 1 comprend plusieurs ressorts verticaux 41, 42 et 43 alignés selon la direction longitudinale X et ayant leur deuxième extrémité sollicitant le deuxième longeron 32 et logée dans le deuxième longeron entre des première et deuxième ouvertures 35 et 36 ou entre des ouvertures 95 et 96 (détaillées plus bas). On peut ainsi disposer d'une plus grande raideur de ressort et répartir l'effort élastique sur la direction longitudinal.

Dans la variante illustrée, les longerons latéraux 31, 33 ont une structure creuse ouverte vers le haut, plus préférentiellement avec une section en L avec une lame inférieure et une lame interne.

La structure 3 comporte au moins une poutre 34 (dite avant) s'étendant selon la direction transversale Y et solidarisant les longerons 31 à 33 au niveau d'une première extrémité longitudinale. Des première et deuxième ouvertures 35 et 36 sont ménagées sous la poutre transversale 34 entre les premier et deuxième longerons 31 et 32 d'une part et entre les deuxième et troisième longerons 32 et 33 d'autre part. Les ouvertures 35 et 36 servent à laisser un passage longitudinal pour des fourches d'un chariot élévateur pour pouvoir déplacer la table 1 vers un autre emplacement et pour permettre le passage des fourches basses lors du chargement avec un gerbeur. La poutre transversale 34 permet à la fois de solidariser les longerons 31 à 33 et à former une interface de levage pour les fourches d'un chariot élévateur ou une interface de stabilisation pour les fourches d'un gerbeur.

Par ailleurs, la structure 3 comporte une poutre 9 (dite arrière) s'étendant selon la direction transversale Y et solidarisant les longerons 31 à 33 au niveau d'une deuxième extrémité longitudinale.

La figure 2 montre le détail en perspective de la poutre arrière 9. Cette poutre transversale 9 permet à la fois de solidariser les longerons 31 à 33 et à former une interface de levage pour les fourches d'un chariot élévateur ou une interface de stabilisation pour les fourches d'un gerbeur, par un côté opposé aux ouvertures 35 et 36. A cet effet, les ouvertures 95 et 96 sont ménagées sous la poutre transversale 9 entre les premier et deuxième longerons 31 et 32 d'une part et entre les deuxième et troisième longerons 32 et 33 d'autre part. Les ouvertures 95 et 96 sont bien entendu laissées libres d'accès pour ne pas interférer avec un passage de fourches.

La poutre 9 comporte ici des parois verticales 93 et 98 solidaires du longeron 33, des parois verticales (seule la paroi 92 est illustrée) solidaires du longeron 32 et des parois verticales (seule la paroi 91 est illustrée) solidaires du longeron 31.

La poutre 9 est réalisée en deux portions 9a et 9b entourant le ressort 43 à l'avant et à l'arrière. La portion 9a (arrière) comporte une première partie circulaire 43a s'étendant horizontalement autour d'une partie du ressort 43, ici sur plus de la moitié arrière du ressort 43. La portion 9b (avant) comporte une deuxième partie circulaire 43b s'étendant horizontalement autour d'une partie du ressort 43, ici sur moins de la moitié avant du ressort 43. Les portions 9a et 9b sont fixées ensemble autour du ressort 43.

Les portions 9a, 9b permettent de renforcer la structure 3 horizontalement en utilisant le maximum d'espace autour des ressorts 41, 43 en minimisant les volumes morts.

Afin de rigidifier la poutre 9 et ainsi la structure 3 :
- la portion 9a comporte deux parois verticales 93, 98 (et 91) en particulier parallèles aux directions Y et Z, solidarisées chacune à une plaque inférieure horizontale des longerons 33 (et 31) ;
- la portion 9b comporte une paroi verticale 99, en particulier parallèle aux directions X et Z, solidarisée à une plaque verticale interne des longerons 33 (et 31) parallèle aux directions X et Z ;
- les portions 9a et 9b comportent chacune une plaque verticale 92, en particulier parallèle aux directions Y et Z, solidarisée à une plaque inférieure horizontale du longeron 32.

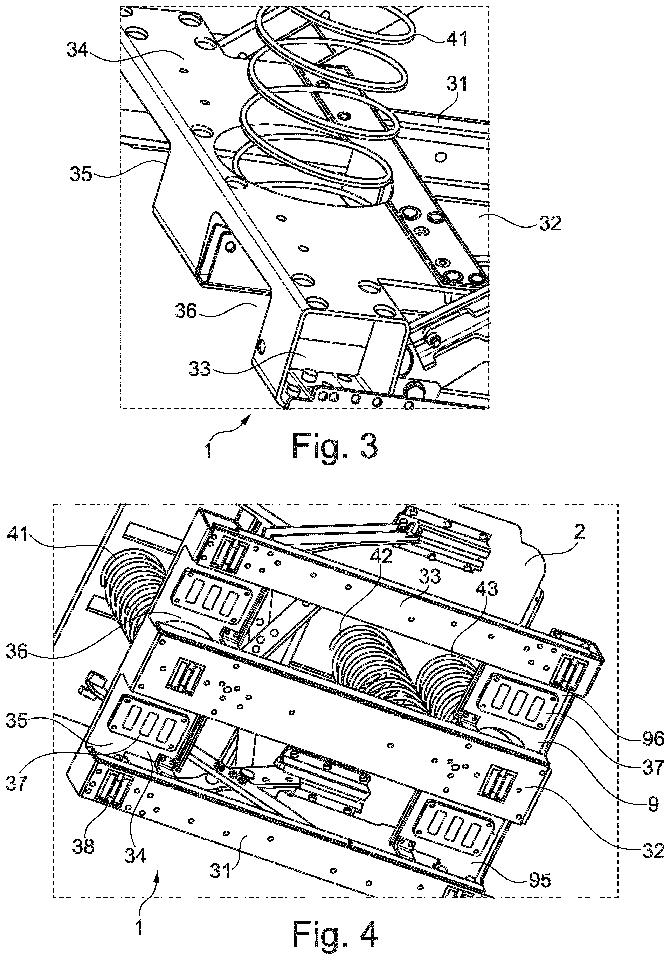

Le même agencement est de préférence prévu pour la poutre 34 vis-à-vis du ressort 41, illustrés en figure 3.

De préférence, les poutres 34, 9 comprennent sur une face inférieure, des patins 37 de réception d'une fourche de charriot. Ces patins 37 empêchent le glissement de la fourche, et amortissent les chocs de levage de la table par le chariot. Ces patins sont illustrés en figure 4.

Dans la variante illustrée, l'extrémité inférieure des bras de ciseaux est logée dans la partie creuse en U ou en L des longerons latéraux 31, 33. Plus précisément, les bras de ciseaux rabattus sont logés dans la partie creuse en U ou en L des longerons latéraux 31, 33. Ainsi, le gain de place est maximisé dans cette variante lorsque la table est repliée. Elle peut avantageusement avoir une taille de moins de 20 cm en position repliée, en particulier une taille minimale d'environ 16cm.

Dans l'exemple illustré ici, les longerons 31, 32 et 33 comportent une face inférieure destinée à former une surface d'appui au sol. De préférence, les longerons 31, 32, 33 comportent également des patins 38 (illustrés en figure 4). Les patins 37, 38 peuvent comporter de l'acier ou un matériau antidérapant.

## Revendications

1. Table élévatrice de manutention à ajustement automatique de niveau (1), comprenant
- un plateau (2) ;
- une structure porteuse (3) comportant des premier (31), deuxième (32) et troisième (33) longerons parallèles s'étendant selon une direction longitudinale (X), comportant des première et deuxième poutres (34, 9) s'étendant selon une direction transversale (Y) et solidarisant les premier (31), deuxième (32) et troisième (33) longerons au niveau de première et deuxième extrémités longitudinales respectivement, des première et deuxième ouvertures (35, 36) étant ménagées sous la première poutre (34) entre les premier (31) et deuxième (32) longerons d'une part et entre les deuxième (32) et troisième (33) longerons d'autre part, des troisième et quatrième ouvertures (95, 96) étant ménagées sous la deuxième poutre (9) entre les premier (31) et deuxième (32) longerons d'une part et entre les deuxième (32) et troisième (33) longerons d'autre part, les première à quatrième ouvertures (34, 9, 35, 36) étant configurées pour permettre l'insertion d'une fourche de chariot ;
- au moins un ressort vertical (41, 43) comportant une première extrémité sollicitant le plateau (2) et une deuxième extrémité sollicitant le deuxième longeron et logée dans le deuxième longeron (32),
et **caractérisée en ce que** la première et/ou la deuxième poutres (34, 9) comporte une partie circulaire (43a, 43b) s'étendant horizontalement autour d'au moins une partie du ressort (41).

2. Table élévatrice de manutention à ajustement automatique de niveau (1) selon la revendication 1, comprenant plusieurs ressorts verticaux (41, 42) alignés selon la direction longitudinale (X) et ayant leur deuxième extrémité sollicitant le deuxième longeron (32) et logée dans le deuxième longeron,
dans laquelle la première et la deuxième poutres (34, 9) comportent chacune une partie circulaire s'étendant horizontalement autour d'un desdits ressorts (41, 42).

3. Table élévatrice de manutention à ajustement automatique de niveau (1) selon la revendication 1 ou 2, dans laquelle ladite poutre (34, 9) est sous forme de deux bras séparés, l'un étant antérieur et l'autre étant postérieur audit ressort (4).

4. Table élévatrice de manutention à ajustement automatique de niveau (1) selon l'une quelconque des revendications précédentes, dans laquelle ladite poutre (34, 9) a une forme de profilé creux.

5. Table élévatrice de manutention à ajustement automatique de niveau (1) selon l'une quelconque des revendications précédentes, dans laquelle ladite poutre (34, 9) comprend sur une face inférieure, au moins un patin (37) de réception d'une fourche de charriot.

6. Table élévatrice de manutention à ajustement automatique de niveau (1) selon l'une quelconque des revendications précédentes, dans laquelle les poutres (34, 9) comprennent des sections en U ouvertes vers le bas.

7. Table élévatrice de manutention à ajustement automatique de niveau (1) selon l'une quelconque des revendications précédentes, dans laquelle le deuxième longeron (32) comporte une section en U ouverte vers le haut.

8. Table élévatrice de manutention à ajustement automatique de niveau (1) selon l'une quelconque des revendications précédentes, comprenant au moins un système de ciseaux latéral (5) guidant le plateau (2) en coulissement selon la direction verticale (Z).

9. Table élévatrice de manutention à ajustement automatique de niveau (1) selon la revendication précédente, dans laquelle le système de ciseaux latéral comprend, de chaque côté latéral, deux bras latéraux ayant chacun une extrémité inférieure fixée à un longeron latéral, **caractérisée en ce que** les longerons latéraux ont une section en U ou en L ouverte vers le haut logeant les extrémités inférieures des bras des ciseaux latéraux.

10. Table élévatrice de manutention à ajustement automatique de niveau (1) selon l'une quelconque des revendications précédentes, dans laquelle les premier à troisième longerons (31, 32, 33) comportent une face inférieure destinée à former une surface d'appui au sol.

## Patentansprüche

1. Hubtisch mit automatischer Niveauregulierung (1), umfassend
- eine Tischplatte (2);
- eine Tragstruktur (3) aufweisend einen ersten (31), einen zweiten (32) und einen dritten (33) parallelen Längsträger, die sich in einer Längsrichtung (X) erstrecken, sowie einen ersten und einen zweiten Träger (34, 9), die sich in einer Querrichtung (Y) erstrecken und den ersten (31), zweiten (32) und dritten (33) Längsträger jeweils an ersten und zweiten Längsenden miteinander verbinden, wobei erste und zweite Öffnungen (35, 36) unter dem ersten Träger (34) einerseits zwischen dem ersten (31) und dem zweiten (32) Längsträger und andererseits zwischen dem zweiten (32) und dem dritten (33) Längsträger angeordnet sind, wobei dritte und vierte Öffnungen (95, 96) unter dem zweiten Träger (9) zwischen dem ersten (31) und dem zweiten (32) Längsträger einerseits und zwischen dem zweiten (32) und dem dritten (33) Längsträger andererseits angeordnet sind, wobei die erste bis vierte Öffnung (34, 9, 35, 36) so ausgebildet sind, dass sie das Einführen einer Gabelstaplergabel ermöglichen;
- mindestens eine vertikale Feder (41, 43) aufweisend ein erstes Ende, das die Tischplatte (2) belastet, und ein zweites Ende, das den zweiten Längsträger belastet und im zweiten Längsträger (32) untergebracht ist,
und **dadurch gekennzeichnet, dass** der erste und/oder der zweite Träger (34, 9) einen kreisförmigen Abschnitt (43a, 43b) aufweist, der sich horizontal um mindestens einen Teil der Feder (41) herum erstreckt.

2. Hubtisch mit automatischer Niveauregulierung (1) nach Anspruch 1, aufweisend mehrere vertikale Federn (41, 42), die in Längsrichtung (X) ausgerichtet sind und deren zweite Enden den zweiten Längsträger (32) belasten und in dem zweiten Längsträger untergebracht sind,
wobei der erste und der zweite Träger (34, 9) jeweils einen kreisförmigen Abschnitt aufweisen, der sich horizontal um eine der Federn (41, 42) herum erstreckt.

3. Hubtisch mit automatischer Niveauregulierung (1) nach Anspruch 1 oder 2, wobei der Träger (34, 9) in Form von zwei getrennten Armen vorgesehen ist, wobei der eine vor und der andere hinter der Feder (4) liegt.

4. Hubtisch mit automatischer Niveauregulierung (1) nach einem der vorhergehenden Ansprüche, wobei der Träger (34, 9) die Form eines Hohlprofils aufweist.

5. Hubtisch mit automatischer Niveauregulierung (1) nach einem der vorhergehenden Ansprüche, wobei der Träger (34, 9) auf einer Unterseite mindestens ein Gleitstück (37) zur Aufnahme einer Gabelstaplergabel aufweist.

6. Hubtisch mit automatischer Niveauregulierung (1) nach einem der vorhergehenden Ansprüche, wobei die Träger (34, 9) nach unten offene U-förmige Abschnitte umfassen.

7. Hubtisch mit automatischer Niveauregulierung (1) nach einem der vorhergehenden Ansprüche, wobei der zweite Längsträger (32) einen nach oben offenen U-förmigen Abschnitt aufweist.

8. Hubtisch mit automatischer Niveauregulierung (1) nach einem der vorhergehenden Ansprüche, umfassend mindestens ein seitliches Scherensystem (5), das die Tischplatte (2) in vertikaler Richtung (Z) gleitend führt.

9. Hubtisch mit automatischer Niveauregulierung (1) nach dem vorhergehenden Anspruch, wobei das seitliche Scherensystem an jeder seitlichen Seite zwei Seitenarme umfasst, von denen jeder ein unteres Ende aufweist, das an einem seitlichen Längsträger befestigt ist, **dadurch gekennzeichnet, dass** die seitlichen Längsträger einen nach oben offenen U- oder L-förmigen Abschnitt aufweisen, der die unteren Enden der Arme der Seitenscheren aufnimmt.

10. Hubtisch mit automatischer Niveauregulierung (1) nach einem der vorhergehenden Ansprüche, wobei der erste bis dritte Längsträger (31, 32, 33) eine Unterseite aufweist, die dazu bestimmt ist, eine Bodenauflagefläche zu bilden.

## Claims

1. A handling lifting table with automatic level adjustment (1), comprising
- a tray (2);
- a load-bearing structure (3) comprising first (31), second (32) and third (33) parallel stringers extending in a longitudinal direction (X), comprising first and second beams (34, 9) extending in a transverse direction (Y) and connecting the first (31), second (32) and third (33) stringers at first and second longitudinal ends respectively, first and second openings (35, 36) being provided under the first beam (34) between the first (31) and second (32) stringers on the one hand, and between the second (32) and third (33) stringers on the other hand, third and fourth openings (95, 96) being provided under the second beam (9) between the first (31) and second (32) stringers on the one hand and between the second (32) and third (33) stringers on the other hand, the first to fourth openings (34, 9, 35, 36) being configured to allow the insertion of a forklift fork;
- at least one vertical spring (41, 43) having a first end acting on the plate (2) and a second end acting on the second stringer and housed within the second stringer (32),
and **characterized in that** the first and/or second beams (34, 9) comprise a circular portion (43a, 43b) extending horizontally around at least part of the spring (41).

2. The lifting table with automatic level adjustment (1) as claimed in claim 1, comprising a plurality of vertical springs (41, 42) aligned in the longitudinal direction (X) and having their second end acting on the second stringer (32) and housed within the second stringer, wherein the first and second beams (34, 9) each comprise a circular portion extending horizontally around one of said springs (41, 42).

3. The lifting table with automatic level adjustment (1) as claimed in claim 1 or 2, wherein said beam (34, 9) is in the form of two separate arms, one anterior and the other posterior to said spring (4).

4. The lifting table with automatic level adjustment (1) according to any of the preceding claims, wherein said beam (34, 9) is in the form of a hollow profile.

5. The lifting table with automatic level adjustment (1) according to any of the preceding claims, wherein said beam (34, 9) comprises on a lower face at least one pad (37) for receiving a forklift fork.

6. The lifting table with automatic level adjustment (1) according to any of the preceding claims, wherein the beams (34, 9) comprise open-bottom U-shaped sections.

7. The lifting table with automatic level adjustment (1) according to any of the preceding claims, wherein the second stringer (32) has an open-top U-shaped section.

8. The lifting table with automatic level adjustment (1) according to any of the preceding claims, comprising at least one lateral scissor system (5) guiding the tray (2) in a sliding manner in the vertical direction (Z).

9. The lifting table with automatic level adjustment (1) according to the preceding claim, wherein the lateral scissor system comprises, on each side, two lateral arms each having a lower end fixed to a lateral stringer, **characterized in that** the lateral stringers have an open-top U- or L-shaped section housing the lower ends of the lateral scissor arms.

10. The lifting table with automatic level adjustment (1) according to any of the preceding claims, wherein the first to third stringers (31, 32, 33) have a lower face intended to form a ground-level bearing surface.
